# EUROPÄISCHE PATENTSCHRIFT

(11) **EP 0 772 839 B1**
(45) Veröffentlichungstag und Bekanntmachung des Hinweises auf die Patenterteilung: **07.05.2003**
(21) Anmeldenummer: 96913695.1
(22) Anmeldetag: 30.05.1996
(51) Int. Cl.: G06K 7/08, G06K 7/10, G06K 19/07

(54) **VERSORGUNGSSPANNUNGSAUFBEREITUNGSSCHALTUNG SOWIE DATENTRÄGER MIT EINER VERSORGUNGSSPANNUNGSAUFBEREITUNGSSCHALTUNG**
SUPPLY VOLTAGE PROCESSING CIRCUIT AND A DATA CARRIER WITH A SUPPLY VOLTAGE PROCESSING CIRCUIT
CIRCUIT DE TRAITEMENT DE TENSION D'ALIMENTATION ET SUPPORT DE DONNEES COMPORTANT UN CIRCUIT DE TRAITEMENT DE TENSION D'ALIMENTATION

(30) Priorität: 31.05.1995 AT 918955
(43) Veröffentlichungstag der Anmeldung: 14.05.1997
(73) Patentinhaber: Koninklijke Philips Electronics N.V., 5621 BA Eindhoven (NL); Mikron Gesellschaft für integrierte Mikroelektronik m.b.H., 8101 Gratkorn (AT)
(72) Erfinder: HOLWEG, Gerald, A-8055 Graz (AT); KOLLER, Manfred, A-8020 Graz (AT); THÜRINGER, Peter, A-8010 Graz (AT)
(74) Vertreter: Peters, Carl Heinrich, Dipl.-Ing.
(86) Internationale Anmeldenummer: IB9600517
(87) Internationale Veröffentlichungsnummer: WO96038805

(56) Entgegenhaltungen:
- EP-A- 0 453 314
- WO-A-89/07295
- DE-A- 4 104 274

## Beschreibung

Die vorliegende Erfindung betrifft eine Versorgungsspannungsaufbereitungsschaltung, insbesondere für kontaktlose, passive, induktive Datenträger, die einen Gleichrichter, einen Stützkondensator und eine parallel zum Stützkondensator geschaltete direkte Parallelreglerstufe aufweist; sie betrifft außerdem einen kontaktlosen, passiven, induktiven Datenträger mit einer Antenne und einer Versorgungsspannungsaufbereitungsschaltung.

Datenübertragungssysteme zur Datenübertragung zwischen einer normalerweise stationären Schreib-Lese-Station und mehreren Datenträgern sind bekannt. Die Datenträger dienen als intelligente, mobile Datenspeicher, die im Nahfeld von Schreib-Lese-Stationen zum Beschreiben oder Auslesen von Daten in Betrieb gesetzt werden. Derartige Systeme werden in unterschiedlichster Ausprägung bezüglich Übertragungsreichweite, Datenübertragungsgeschwindigkeit, Integrationsgrad, Speicherkapazität und Intelligenz der Datenträger usw. und in verschiedensten Applikationen wie Zutrittskontrolle, industrielle und kommerzielle Objektidentifikation, Wegfahrsperren, automatische Fahrtenkontrolle usw. eingesetzt. Ein weiteres Beispiele ist die automatische Straßenmauteinhebung, sobald ein an einem Fahrzeug angebrachter Datenträger an einer Schreib-Lese-Station einer Mautstelle vorbeifährt.

Es gibt Datenübertragungssysteme mit aktiven Datenträgern (diese weisen eine eigene Stromquelle auf), es gibt aber auch Datenübertragungssysteme mit passiven Datenträgern, die von einem HF-Signal der Schreib-Lese-Station über eine induktive Kopplung mit Energie versorgt werden. Als Takt kann die Frequenz des HF-Signales nach entsprechender Teilung verwendet werden, sodaß kein eigenes Taktsignal übertragen werden muß. Um Daten von der Schreib-Lese-Station zum Datenträger zu übertragen, ist es möglich, das HF-Signal für sehr kurze Zeitspannen zu unterbrechen; maßgebend dafür, ob "0" oder "1" übertragen wird, ist der Abstand zwischen den Unterbrechungen, den der Datenträger einfach ermitteln kann, indem er die Taktimpulse zwischen zwei Unterbrechungen zählt. Die Übertragung von Daten vom Datenträger zur Schreib-Lese-Station kann durch Belastungsmodulation des von der Schreib-Lese-Station ausgesendeten HF-Signales erfolgen. Es ist auf diese Weise möglich, mit nur einem Signal sowohl Energie als auch Takt von der Schreib-Lese-Station zum Datenträger und Information in beiden Richtungen zu übertragen. Dieses System ist im österreichischen Patent 395 224 beschrieben.

Verwendet man zur Spannungsversorgung der Datenträger eine herkömmliche Versorgungsspannungsaufbereitungsschaltung, die einen Gleichrichter, einen Stützkondensator und eine parallel zum Stützkondensator geschaltete direkte Parallelreglerstufe (z.B. in Form einer Zenerdiode) aufweist, so ergibt sich das Problem, daß relativ lange Unterbrechungen des HF-Signales notwendig sind, damit diese vom Datenträger zuverlässig erkannt werden. Wie im Rahmen der vorliegenden Erfindung festgestellt wurde, liegt dies daran, daß bei Unterbrechung des HF-Signales die Spannungsversorgung des Datenträgers ausschließlich vom Stützkondensator erfolgt und daher die Antennenspule in keiner Weise belastet ist, sodaß diese aufgrund von Resonanzphänomenen längere Zeit nachschwingt. Ein weiterer Nachteil besteht darin, daß die Parellelreglerstufe relativ hohe Ströme aufnehmen muß, wenn der Datenträger sehr nahe an der Schreib-Lese-Station vorbeigeführt wird. Aus diesem Grund ist seine Regelgeschwindigkeit zwangsläufig relativ niedrig, sodaß die Spannungsregelung nicht zufriedenstellend ist.

Herkömmliche Versorgungsspannungsaufbereitungsschaltungen gemäß der Präambel von Anspruch 1 sind bekannt aus EP-A-0 453 314, DE-A-4 104 274 und WO 89/07295.

Es ist Aufgabe der vorliegenden Erfindung, diese Nachteile zu vermeiden und einen Datenträger zu schaffen, der auch sehr kurze Unterbrechungen des HF-Signales detektieren kann, sodaß die Datenübertragungsgeschwindigkeit von der Schreib-Lese-Station zum Datenträger erhöht werden kann. Außerdem soll eine Versorgungsspannungsaufbereitungsschaltung geschaffen werden, die eine besser stabilisierte Versorgungsspannung liefert. Auch soll die Zuverlässigkeit der Datenträger, insbesondere ihre Festigkeit bezüglich statischer Aufladungen, erhöht werden.

Diese Aufgaben werden durch eine Versorgungsspannungsaufbereitungsschaltung der eingangs genannten Art erfindungsgemäß dadurch gelöst, daß zusätzlich eine indirekte Parallelreglerstufe vorgesehen ist, die von der direkten Parallelreglerstufe entkoppelt ist und die eine höhere Strombelastbarkeit und dadurch ein langsameres Regelverhalten aufweist als die direkte Parallelreglerstufen. Sie werden weiters durch einen Datenträger der eingangs genannten Art erfindungsgemäß dadurch gelöst, daß die Versorgungsspannungsaufbereitungsschaltung wie eben beschrieben ausgebildet ist, wobei keine zusätzliche Überspannungsschutzschaltung an den Antennenanschlüssen vorgesehen ist.

Durch die erfindungsgemäße Ausbildung des Datenträgers bzw. seiner Versorgungsspannungsaufbereitungsschaltung wird erreicht, daß - von der direkten Parallelreglerstufe entkoppelt - z.B. direkt am Gleichrichter eine weitere, indirekte Parallelreglerstufe vorgesehen ist. Diese indirekte Parallelreglerstufe dient zur Grobregelung; sie kann hohe Ströme aufnehmen, ist aber dadurch relativ langsam, d.h. ihre Regelgeschwindigkeit ist gering. Da also eine Grobregelung bereits von der indirekten Reglerstufe durchgeführt wird, braucht die direkte Reglerstufe nur relativ geringe Ströme aufnehmen, sodaß sie eine entsprechend höhere Regelgeschwindigkeit aufweisen kann; dadurch wird die Regelung der Versorgungsspannung sehr gut. Ein weiterer Vorteil der indirekten Reglerstufe besteht darin, daß sie auch während der Unterbrechungen des HF-Signales die Antenennenspule belastet, sodaß deren Schwingungen stark gedämpft werden und dadurch auch sehr kurze Unterbrechungen zuverlässig detektiert werden können. Ein weiterer Vorteil der indirekten Reglerstufe besteht darin, daß diese - da ein rasches Regelverhalten nicht erforderlich und auch gar nicht erwünscht ist - für sehr hohe Ströme ausgelegt werden kann, sodaß sie auch statische Aufladungen problemlos ableiten kann. Der Datenträger wird auf diese Weise ohne weitere Schutzmaßnahmen sehr unempfindlich gegen die Ableitung elektrostatischer Aufladungen, d.h. er gewährleistet einen hohen ESD-Schutz (ESD = electrostatic discharge (engl.) = elektrostatische Entladung). Besonders günstig ist auch die Tatsache, daß die erfindungsgemäße Schaltung eine vollständige, sehr flächeneffiziente, monolithische Integration ermöglicht.

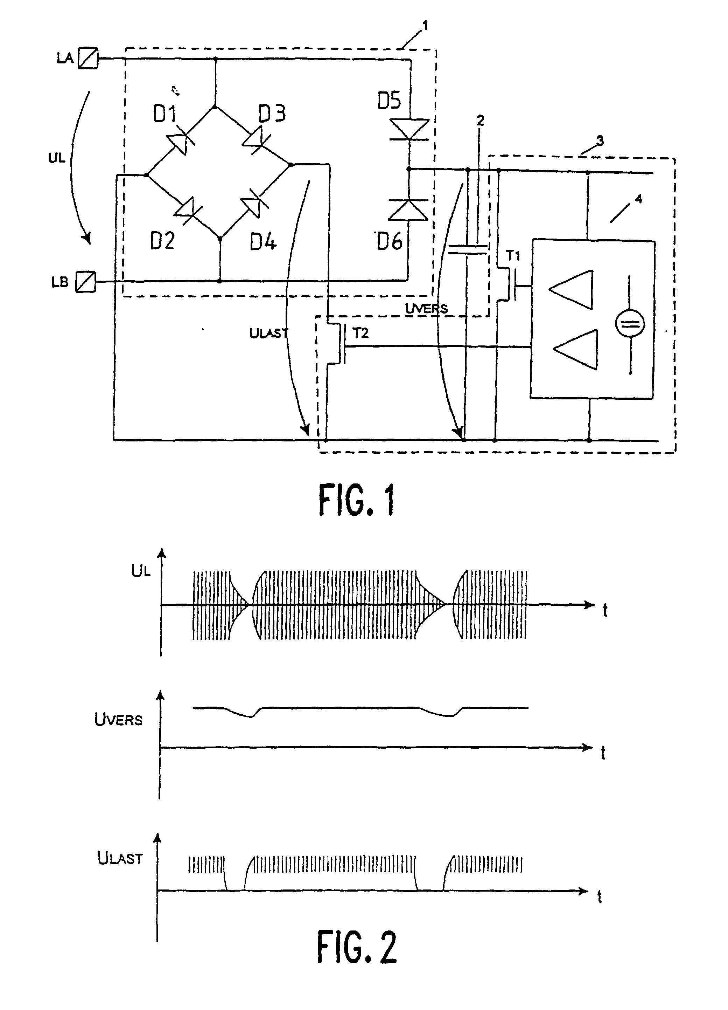

Die Erfindung wird nun anhand der Zeichnung näher erlautert. Es zeigt: Fig. 1 das Prinzipschaltbild eines erfindungsgemäßen Datenträgers und Fig. 2 den zeitlichen Verlauf von Spannungen an bestimmten Punkten innerhalb der Schaltung des Datenträgers gemäß Fig. 1.

In Fig. 1 ist die Prinzipschaltung der Versorgungsspannungsaufbereitungsschaltung dargestellt. An den Anschlüssen LA und LB ist eine Spule angeschlossen. Das von dieser empfangene HF-Signal wird der Versorgungsspannungsaufbereitungsschaltung zugeführt. Diese besteht aus einem Gleichrichtemetzwerk 1 (Dioden D1-D6), vorzugsweise realisiert mit MOS-Transistoren, das aus der angelegten Wechselspannung U_{L} zwei voneinander entkoppelte gleichgerichtete Spannungen U_{LAST} und U_{VERS} erzeugt, aus einer Stützkapazität 2 zur Glättung der eigentlichen Versorgungsspannung U_{VERS} und einer Spannungsreglerschaltung 3. Die Spannungsreglerschaltung 3 besteht aus zwei Parallelreglern mit je einem Transistortreiber T1 bzw. T2 und einer Regelungsverstärkerstufe mit Referenzspannung 4. Beide Reglerstufen arbeiten nach dem Parallelreglerprinzip, d.h., die Treibertransistoren werden aktiviert, sobald die Versorgungsspannung U_{VERS} einen zulässigen Wert, der von der Referenzspannung abgeleitet wird, überschreitet. Durch Aktivierung der Treibertransistoren wird Strom aus dem Versorgungskreis abgezogen und damit die Versorgungsspannung auf einen zulässigen Wert bedämpft. Der erste Reglerkreis mit Treiberstufe T1 besitzt eine schnelle Regelungscharakteristik und ist daher in der Lage, Änderungen in der Wechselspannungsamplitude sehr rasch auszuregeln. Dadurch ergibt sich im Zusammenwirken mit der Stützkapazität 2 eine sehr konstante Versorgungsspannung U_{VERS} auch bei raschen Amplitudenänderungen in der Antennenwechselspannung U_{L} (siehe Fig. 2). Allerdings muß der Treibertransistor T1 aus Geschwindigkeitsgründen klein und daher schwach dimensioniert werden und ist daher nicht in der Lage, große Ströme bei sehr starker Energieeinkopplung abzuleiten. Diese Aufgabe erfüllt die zweite Regelungsstufe mit Treibertransistor T2. Aufgrund der Größe und hohen Treiberstärke von Transistor T2 ergibt sich ein eher träges Verhalten des zweiten Reglers. T2 wirkt nicht direkt auf die Versorgungsspannung U_{VERS}, sondern bedämpft diese nur indirekt durch Bedämpfung der Wechselspannungsamplitude über ein eigenes Diodennetzwerk für die Belastungsspannung U_{LAST}. Aufgrund der Trägheit des zweiten Reglers ist die Belastungsspannung U_{LAST} sehr starken Schwankungen unterworfen und bricht in den Energiepausen meist völlig zusammen (siehe Fig. 2), und außerdem wird die Antennenwechselspannung U_{L} in den Energiepausen stark bedämpft, was zu einem raschen Ausschwingen von U_{L} in den Energiepausen führt (siehe ebenfalls Fig. 2), was wiederum für eine schnelle Pausenerkennung und damit eine hohe Datenübertragungsrate von der Schreib-Lese-Station zum Datenträger günstig ist. Im Gegensatz dazu sinkt die Versorgungsspannung U_{VERS} in den Energiepausen nur unwesentlich (siehe wiederum Fig. 2). Das spannungsbegrenzende Verhalten beider Parallelreglerstufen hat auch direkte begrenzende Wirkung auf die Eingangsspannung U_{L} an den Antennenanschluß-Pads LA und LB des Chips. Aufgrund dessen ergibt sich ein sehr guter Überspannungsschutz (ESD-Verträglichkeit) an den Antennenanschluß-Pads, sodaß keine zusätzliche Schutzbeschaltung erforderlich ist.

Die beschriebene Versorgungsspannungsaufbereitungsschaltung vereinigt in sich wesentliche Merkmale, die insbesondere für kontaktlose Datenträgersysteme von großen Nutzen sind, wie hoher ESD-Schutz, hohe Datenübertragungsrate für Pausenabstandsmodulation und vollständige, flächeneffiziente, monolithische Integration.

## Patentansprüche

1. Versorgungsspannungsaufbereitungsschaltung, insbesondere für kontaktlose, passive, induktive Datenträger, die ***ein Gleichrichternetzwerk (1),*** einen Stützkondensator (2) und eine parallel zum Stützkondensator (2) geschaltete erste Parallelreglerstufe (T1) aufweist,
**dadurch gekennzeichnet, daß *das Gleichrichternetzwerk (1) zum Erzeugen zweier voneinander entkoppelter gleichgerichteter Spannungen (U***_{***LAST***}***, U***_{***VERS***}***) ausgebildet ist, von denen eine (U***_{***VERS***}***) dem Stützkondensator (2) und der dazu parallel geschalteten ersten Parallelreglerstufe (T1) zugeführt wird, und* daß** zusätzlich direkt am *Gleichrichternetzwerk (1)* eine zweite Parallelreglerstufe (T2) vorgesehen ist, die von der ersten Parallelreglerstufe (T1) entkoppelt (D3, D4; D5, D6) ist, ***der die zweite (U***_{***LAST***}***) der voneinander entkoppelten gleichgerichteten Spannungen (U***_{***LAST***}**, *U***_{***VERS***}***) zugeführt wird*** und die eine höhere Strombelastbarkeit und dadurch ein langsameres Regelverhalten aufweist als die erste Parallelreglerstufe (T1).

2. Kontaktloser, passiver, induktiver Datenträger mit einer Antenne und einer Versorgungsspannungsaufbereitungsschaltung,
**dadurch gekennzeichnet, daß** die Versorgungsspannungsaufbereitungsschaltung nach Anspruch 1 ausgebildet ist und daß keine zusätzliche Überspannungsschutzschaltung an den Antennenanschlüssen (LA, LB) vorgesehen ist.

## Claims

1. A supply voltage processing circuit which is intended notably for contactless, passive, inductive data carriers and includes a rectifier network (1), a sustaining capacitor (2) and a first parallel regulator stage (T1) which is connected parallel to the sustaining capacitor (2), **characterized in that** the rectifier network (1) is arranged to generate two mutually decoupled, rectified voltages (U_{LAST,} U_{VERS}), one of which (U_{VERS}) is applied to the sustaining capacitor (2) and the first parallel regulator stage (T1) which is connected parallel thereto, and that additionally a second parallel regulator stage (transistor T2) is connected to the rectifier network (1), which second stage is decoupled (diodes D3, D4; D5, D6) from the first parallel regulator stage (transistor T1), receives the second one (U_{LAST}) of the mutually decoupled, rectified voltages (U_{LAST,} U_{VERS}), and has a higher current loadability, and hence a slower regulating behavior, than the first parallel regulator stage (transistor T1).

2. A contactless, passive, inductive data carrier with an antenna and a supply voltage processing circuit, **characterized in that** the supply voltage processing circuit is constructed as disclosed in Claim 1, without an additional overvoltage protection circuit being connected to the antenna terminals (LA, LB).

## Revendications

1. Circuit de traitement de tension d'alimentation, en particulier pour un support de données inductif, passif et sans contact qui comprend un réseau redresseur (1), un condensateur auxiliaire (2) et un premier étage régulateur parallèle (T1) monté parallèlement au condensateur auxiliaire (2),
**caractérisé en ce que** le réseau redresseur (1) est conçu pour la production de deux tensions (U_{CHARGE}, U_{ALIM}) redressées, découplées l'une de l'autre, dont une (U_{ALIM}) est amenée au condensateur auxiliaire (2) et au premier étage régulateur parallèle (T1) monté parallèlement à celui-ci et qu'en plus, il est prévu directement sur le réseau redresseur (1) un deuxième étage régulateur parallèle (T2) qui est découpé par le premier étage régulateur parallèle (T1) (D3, D4, D5, D6) auquel est amenée la deuxième (U_{CHARGE}) des tensions (U_{CHARGE}, U_{ALIM}) redressées découplées l'une de l'autre et qui présente une intensité maximale admissible plus élevée et, dès lors, un comportement de régulation plus lent que le premier étage régulateur parallèle (T1).

2. Support de données inductif, passif et sans contact avec une antenne et un circuit de traitement de tension d'alimentation,
**caractérisé en ce que** le circuit de traitement de tension d'alimentation est conçu selon la revendication 1 et qu'il n'est pas prévu de circuit supplémentaire de protection contre les surtensions aux bornes d'antenne (L1, LB).
